# EUROPEAN PATENT APPLICATION

(11) **EP 2 390 025 A1**
(43) Date of publication of application: **30.11.2011**
(21) Application number: 10461517.4
(22) Date of filing: 30.05.2010
(51) Int. Cl.: B22D 11/16, G06F 17/50

(54) **Method for casting using simulation of casting process, system for casting using simulation of casting process and data base**

(71) Applicant: AKADEMIA GORNICZO-HUTNICZA im. Stanislawa Staszica, 30-059 Krakow (PL)
(72) Inventor: Malinowski, Pawel Michal, 30-127, Krakow (PL); Suchy, Jozef Szczepan, 40-018, Katowice (PL)
(74) Representative: Hudy, Ludwik

(57) **Abstract**

In casting method with casting process simulation use consisting in defining of cast features on the grounds of the cast related information received, working out of casting process simulation, running the simulation and executing the casting process after successful completion of simulation test, initial searching criteria based on the cast features defined on the grounds of received information are determined and used in database searching in order to get a list of designs, from which every one constitutes information set defining cast production technology by means of thermo-kinetic and process engineering parameters, and best meeting the searching criteria, while the database is created from data related to carried out simulations of casting process and real casting processes, and contains data regarding foundries, structural and material data of casts, casts execution technology descriptions, results of worked out casting processes simulations, descriptions of produced casts and relations between foundries related data, casts structural data, descriptions of casts production technological procedures and results of worked out simulations as well as descriptions of produced casts, while at least one design from casts design list, best meeting the searching criteria and constituting an information set defining cast production technology with thermo-kinetic and technological parameters, after being found in the database, constitutes input data for molding process simulation development of the cast which is to be produced.

## Description

The object of the invention is a method for casting using simulation of casting process, system for casting using simulation of casting process, and also database.

Casting, as manufacturing process of objects, has been known since thousands of years, especially as regards complex shape objects. Complex shapes of objects being produced are accompanied with complexity of metallurgical processes, which demands using of modern, computationally advanced informatics tools for their designing, optimization, and storing of information connected with used casting technology and process engineering data analysis. In order to obtain high quality manufactured objects at relatively low costs, it is advisable to carry out tens, or sometimes hundreds of metallurgical processes simulations within single project framework, frequently with use of very specialist simulation software, serving reproduction of real thermo-kinetic processes occurring during filling and solidification of castings. The result of simulation is data, most frequently available in the form of pictures, films, animations, tables, charts, parameter sets. The data depends on the project, version, alloy type, molding sand, overall dimensions, technology employed, which ease working out of final shape of the object being cast and technology used for its creation.

The simulation method of incompressible, viscous liquid behavior in casting process is known from the publication WO 0203309 A1 of international invention submission entitled *"Thermal flow simulation for casting*/*molding processes".* This method uses classical, dynamical equations describing liquid behavior and finite elements method in order to determine liquid momentum and energy. This method optionally takes into account during simulation the liquid flow through injection nozzle, porosity forming, thermal flow between the mold and liquid, cooling effect resulting from lubricant coating the mold.

Optimization of cast shape and production planning is known from the publication EP 1724716 A1 of European invention submission entitled *"Optimization process of a metal casting production process".* The aim of optimization is working out of parts production, which would be cost effective, and particularly of production processes related to production of casts, such as metal casts and parts cast from plastic. Furthermore the publication presents methods and systems that enable joining of assumed properties of casts and casts shapes optimization loops with local material requirements during components forming, thus improving the final cast shape.

The drawback of described methods is high labour demand of cast production technology development, because the development requires many simulations of casting process and simulation tests in order to meet the criteria related to the cast features.

The objective of the invention is creation of method and system leading to shortening of specific cast production technology preparation time, lower consumption of manpower as well as expensive equipment, and also shortening of simulation software utilization time.

The essence of the invention is, that in casting method with casting process simulation use, comprising the following steps: defining of cast features on the grounds of the cast related information received from manufacturer, working out of casting process simulation, running the simulation and executing the casting process after successful completion of simulation test, initial searching criteria based on the cast features defined on the grounds of received information are determined and used in database searching in order to get a list of designs, from which every one constitutes information set defining cast production technology by means of thermo-kinetic and process engineering parameters, and best meeting the searching criteria, while the database is created from data related to carried out simulations of casting process and real casting processes, and contains data regarding foundries, structural and material data of casts, casts execution technology descriptions, results of worked out casting processes simulations, descriptions of produced casts, and relations between foundries related data, casts structural data, descriptions of casts production technological procedures and results of worked out simulations as well as descriptions of produced casts, while at least one design from casts design list, best meeting the searching criteria and constituting an information set defining cast production technology with thermo-kinetic and technological parameters, after being found in the database, constitutes input data for molding process simulation development of the cast which is to be produced.

Preferably, after the list of designs best meeting the search criteria is obtained, an analysis of selected design or selected designs is executed for using them in casting process, simulation of casting process is worked out with optional change of input parameters of the simulation, the casting process simulation is run, and its results saved in the database.

Preferably, after completion of the simulation, its results are analysed and checked for conformity with the cast features defined on the grounds of received information, and in case the simulation results do not meet the initial assumptions regarding the cast features, specific features characterising the design are selected and subsequent search criteria determined, and the database searched again in order to obtain subsequent design meeting search criteria, repeating the database searching and/or simulation until the design is found which, after performing of simulation for the subsequent design, will meet initial assumptions regarding the cast features.

It is advisable to do additional design analysis, examining selected input data influence on output data resulting from introduced cast production technology changes for new version of the design, in order to determine how the change of selected parameters influences simulation results, by comparing results of two simulations with use of simple scoring system.

Preferably, input data are part of database, can be supplemented, are modifiable and are input parameters characterising the specified casting technology, selected from a data group related to cast geometry, filling system geometry, chills, feeding system as well as arrangement and adequate number and size of risers, core, molding sand parameters, technological parameters, spatial grid parameters, filter parameters, alloy parameters, filling temperature, filling time, mass of risers to mass of cast ratio.

Preferably, output data are part of database, can be supplemented, are modifiable and are results of simulations regarding data selected from the group consisting of information related to cast temperature field distribution in time, velocity field distribution in time, flow tracers, metallographic data, results of strength tests, material consumption, labour intensity, displacements, production, stresses, filling time, liquid phase percentage, thermal nodes, porosity, hardness, solidification time.

The cast features can be information selected from the group consisting of data regarding cast overall dimensions, alloy type, molding sand, thickness of cast walls, forming technology, cast core used, casting technology.

A design meeting the search criteria, or list of designs best meeting the cast related search criteria, obtained in result of simulation, may contain information selected from a group consisting of data concerning cast temperature field distribution in time, velocities field distribution in time, alloy flow tracers in time, filling time, liquid phase percentage, thermal nodes of cast, porosity of cast, hardness of cast, solidification time of cast, stresses, displacements, metallographic examination results, strength testing results, material consumption, production, labour demand.

The database can be part of database system, containing, apart from database itself, the user interface enabling viewing, downloading of data contained in database and making changes in it, while the database system has client-server type architecture, and the database is relational type and contains set of tables and relations linking them, while the tables contain at least information concerning numerical, textual and multimedia data.

The essence of the invention is also casting system, employing casting process simulation, containing order reception module with specified cast features, design development module, simulation development and running module, prototype facility and foundry. In this system, module of receiving orders containing a cast features is connected to cast designs searching module, each of them being information set defining cast production technology by means of thermo-kinetic and process engineering parameters, and meeting the cast features criteria, which has access to database created on the grounds of carried out simulations of casting processes and real casting processes, and containing data regarding foundries, structural data of casts, casts execution technology descriptions, results of worked out simulations, descriptions of produced casts, and relations between foundries related data, casts structural data, descriptions of casts production technological procedures and results of worked out simulations as well as descriptions of produced casts, while access to the database is granted to analytic module of cast designs best meeting search criteria related to cast features, while the module of design analyses is able to communicate with module of designs adaptation and development, which is connected to prototyping facility and/or foundry, which are to produce the cast conforming to the order.

The essence of the invention is also database used in casting process simulation, which is relational type database containing set of tables and relations between them, while the tables contain information regarding numerical, textual and multimedia data, defining cast production technologies with thermo-kinetic and technological parameters. Such database constitutes data set recorded in precisely determined way in structures corresponding to assumed data model. As popularly understood, it includes data and computer software specialized in collecting and processing the data.

Database can be created from data regarding completed casting process simulations and real casting processes, and can contain foundry related data, as well as structural and material data of casts, descriptions of casts production technology, results of casting process simulations worked out, descriptions of produced casts and relations between foundry related data, casts structural data, descriptions of cast production technological procedures, as well as results of developed simulations and casts produced.

The invention object is presented in realisation examples on illustration, on which Fig. 1 presents block diagram of casting system employing casting process simulation, Fig. 2 presents diagram of triple-layer client-server type database system architecture, Fig. 3 presents database system in diagrammatic form, Fig. 4 presents some basic elements of database in diagrammatic form, Fig. 5 presents demonstration view of graphical user interface screen with panel for comparing of photos, Fig. 6 presents block diagram of one possible casting process preparation procedure, Fig. 7 presents block diagram of one possible casting process preparation and realization procedure, Fig. 8 presents block diagram of input parameters influence on output data analysis, as well as graphical representation of parameters change and scoring system.

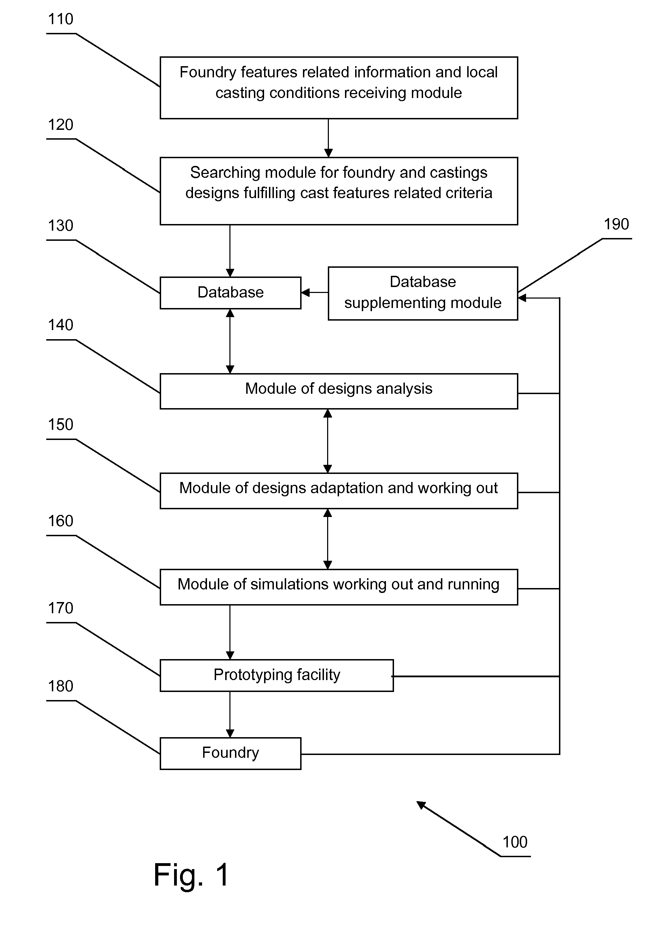

Casting system 100, using casting process simulation in its most general shape, was presented on Fig. 1. First of all the system contains module or unit 110 for reception of orders from manufacturers with stated cast features and with optionally given local casting conditions, module or unit 120 for searching of foundry designs and cast designs meeting the criteria regarding the cast features, database 130, module or unit 140 for analysis of foundry designs list, best meeting the cast features related search criteria and/or list of casts designs best meeting the cast features related search criteria, module or unit 150 of designs adaptation and working out, module or unit 160 of simulation working out and running, prototyping facility 170 and foundry 180. In this solution, module 110 for reception of orders with stated cast features is connected with searching module 120 of foundry designs and/or cast designs best meeting cast features related criteria that has access to database 130 created on the grounds of completed casting process simulations and real casting processes, and containing structural data of casts and optionally foundry related data. Furthermore, database 130 may contain descriptions of cast-making technological procedures, results of developed simulations, descriptions of produced casts, and relations between foundries related data, structural data of casts, descriptions of cast-making technological procedures, results of developed simulations and also descriptions of produced casts. Module 140 of cast designs list and casts production analysis, shortly called designs, and best meeting the search criteria, has access to database 130. In other words, a design includes cast production technology proposition, which would lead to producing of cast meeting specified criteria, related, for example to shape, strength of its parts, material, and similar, determined by employer, and also cast proposition.

So the design term is understood as data, for example in the form of diagrams, drawings, numerical and similar values, characterizing cast manufacturing process, and also determining the cast itself, produced according to the process, that is determining the cast shape, material, values of stresses that do not cause the cast failure, and similar.

It can be most generally said, that design consist of information set defining cast production technology by means of various thermo-kinetic and technological parameters. The information may concern both casting process, which can be pressure die casting, gravitational casting, centrifugal casting, casting with rotated mold, cire perdue process, and equipment used during casting process preparation and also during casting process, and cast itself, too.

Next the set of features characterizing technology, method of casting, cast, is understood under the term of search criteria. Search criteria serve as the set of input parameters entered into design searching module, and a result, that is output data of searching, can be presented in a form of designs list meeting all search criteria selected. All measurable parameters recorded in database can be used in quality of search criteria. In the future, photos and animations may be used as search criteria, which currently cannot be used in such quality because current database management systems do not have at disposal searching engines based on photos or animations. Any numerical or textual parameters, determining data concerning a design or simulation, can be also used as search criteria by user. For example, the criteria for one of new technology designs can be such data, as overall dimensions, where cast size is determined by height 500mm ± 50mm, width equal to 400mm ± 50mm, depth equal to 350mm ± 50mm. Casting technology, such as pressure die casting, metal type, such as non-ferrous metals, metal - such as aluminum, metal temperature, for example 700°C, can serve as additional criteria. The list of all designs, that is information sets present in database and defining, by means of various thermo-kinetic and technological parameters, cast production technology of above given size, meeting specified criteria, will be the search result.

Referring to the system presented on Fig. 1, design analysis module 140 is able to communicate with design adaptation and working out module 150, which is connected with simulation working out and running module 160, which is connected with prototyping facility 170 and/or foundry 180, in which the cast conforming to an order is to be produced.

In one of solutions, database supplementing module 190, having access to database 130 is connected with, or communicates with analysis module 140 of designs best meeting search criteria, design adaptation and working out module 150, simulation working out and running module 160, prototyping facility 170 and/or foundry 180.

Some of above presented system elements can be joined one with another, for example reception module 110 of orders with stated cast features and optionally given local casting conditions, searching module 120 of designs best meeting cast features related criteria, database 130, analysis module 140 of designs list best meeting cast features related search criteria, design adaptation and working out module 150, simulation working out and running module 160, and may create separated systems.

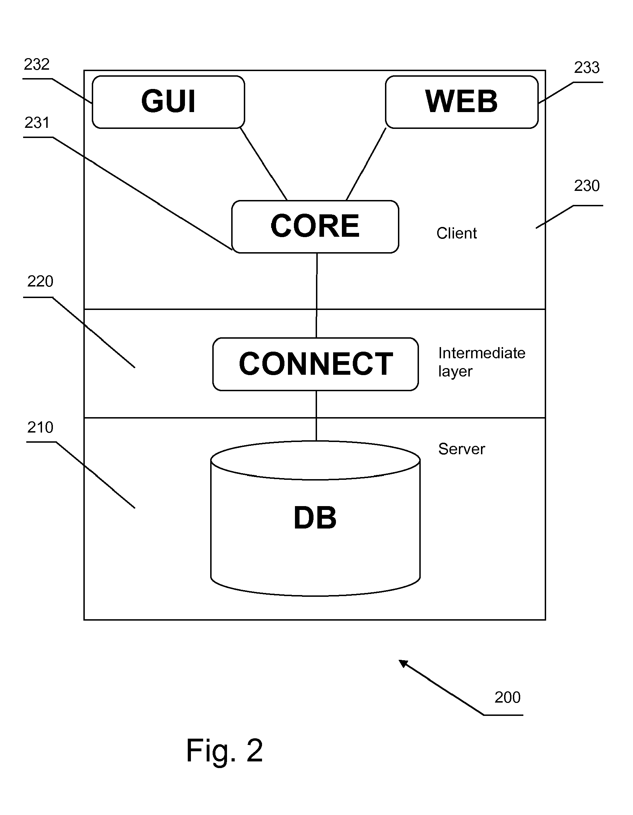

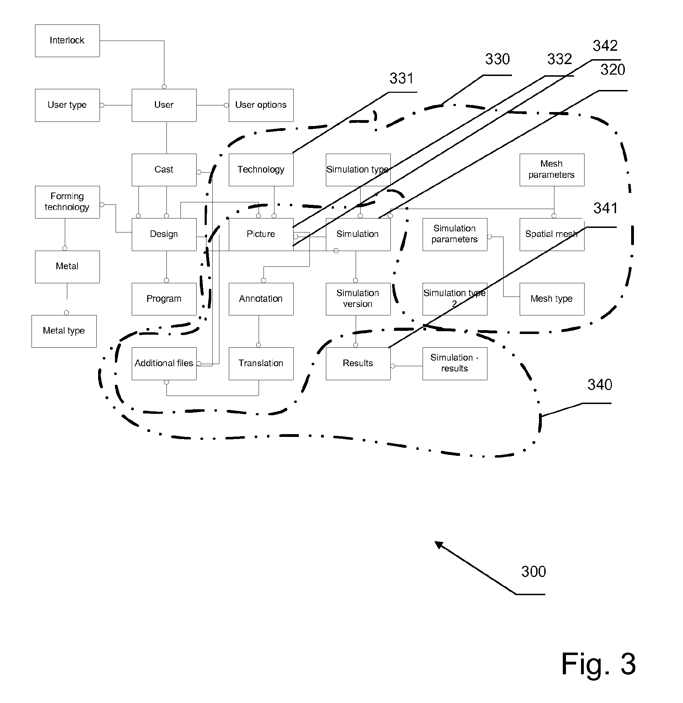

One of such separated systems is database system together with graphical user interface. The system is database based information technology system together with additional applications for management, administration and database maintenance purposes. The system is intended for archiving of simulation results and data concerning real casting processes carried out, together with data concerning casts obtained in result of real casting processes carried out, easy searching or specific designs meeting specified criteria, simulation results analysing, comparing of various simulation versions. In one of solutions, database system is based on computer systems using such software as Visual Studio based on libraries, for example Microsoft Corp. company .NetFramework 3.5 and MySQL 5.0 - as relational database server of client-server architecture type, extended Markup Language (XML), Secure Socket Layer (SSL) protocol, with maintaining of highest security standards. Database system, which in presented on Fig. 2 solution has client-server architecture type, is composed of two main parts, namely the database and user interface. The database structure, shown on Fig. 3 is built of approximately 30 tables linked between them with adequate relations, and several views, that is separated parts of the tables which are to be shown. Each table has Primary Key and one or several Foreign Keys, that allow for creating relations between the tables. Most of the tables is supplemented with one or several indices for optimization of data searching speed in the database, which is also connected with shortening the time from moment of SQL query sending to obtaining results. Database system enables storing of various data types concerning pictures, films, animations, sets of parameters, tables, charts, diagrams, schemes and similar, as well as storing of additional binary files having arbitrary extension. The vital fact is that database system is independent on simulation programs. This means, that the system can store data originating from various simulation programs, which can be used in foundry engineering.

In the basic database management system architecture of client-server type, presented on the Fig. 2, its functionality is divided between two module types, namely client module and server module. The client module, which is the user module in terms of solutions presented here, was designed in such manner, so as launching it and running on database end users workstations or personal computers would be possible. In present solution, client modules are usually used for serving of database using applications as well as to making adequate interfaces available. This means that client module handles user actions on the database and makes friendly interface available to him/her, for example based on forms or menu of Graphical User Interface, abbreviated as GUI.

In present solution the server module, which is relational database where data is stored in simple linear files called relations or tables, handles data storage, data access operations, data searching operations, and another, similar functions. Client-server architecture concept assumes existence of whole network infrastructure including many personal computers and workstations, and much less numerous group of high performance computers linked to each other by means of local area network or computer network of any other, arbitrary type. In such network infrastructure, client has usually a form of such user computer, which offers some possibilities both in scope of user interface handling, and in local processing domain. When client requests access to additional functionalities or resources, for example to information contained in database that are not maintained on its local computer, then client computer establishes connection to adequate server using intermediate layer shown on Fig. 2, providing measures necessary for this request realisation. Next, the server in presented solution is such computer, which can give client computers, that means user computers, access to such services as file access, archiving or database access. Handling of queries and transaction functionality is realised on server side, therefore the server in solutions built according to this architecture is frequently called the query server or transaction server. In relational database management systems such server is with equal frequency called SQL server, because most of such type solutions is based on SQL language and standard.

In presented simulation system, dedicated driver, located in intermediate layer between client and server, was used. This is dedicated driver, ensuring client to server connection, optimised for utilization of .Net Framework platform possibilities called MySQL Connector Net in version 5.2.3. On the Fig. 2 three-layer architecture 200 of client-server type for database management systems was presented in diagrammatic way. On the client 230 side handling of Graphical User Interface 232 (abbreviated as GUI) is accomplished, for example Visual Basic 2008 Professional of Microsoft Corp., called frequently graphical environment, which is general definition of the information presentation method and interaction with an user by computer. Apart from standard window application based interface, database system can possess WEB 233 interface, determined also as WWW interface, using HTTPS protocol (so called Hyper Text Transfer Protocol Secure), operating on 443 port and using presented database structure.

By means of graphical interface, user downloads data form database following earlier login to the system. Graphical User Interface (GUI) offers visualisation possibility of data downloaded from database, enables defining of new project, comparing various simulation versions results, analysis of selected technology, and so on. Graphical user interface has modular structure. In one of solutions, graphical user interface, which can be of window-type interface, is composed of the following basic modules:
information downloaded from database entering and visualisation module (input/output data module);
the module serving database searching by means of basic and/or advanced search criteria (searching module);
the module serving analysis of selected technologies, enabling tracing of changes in individual simulation versions (analysing module);
the module serving various statistics viewing and report generating (statistics/reports module)

The earlier mentioned WEB 233 user interface, which can be one of three-layer client-server type architecture element, is based on HTML language (Hyper Text Markup Language), XML (extended Markup Language), using large capacities of Web Services.

Another element of three-layer client-server type architecture is system core 231, developed, for example, with Viusual C# 2008 Professional of Microsoft Corp. company, constituting part of the system serving object-type representation of information downloaded from database, by means of main constituent of SQL (Structured Query Language) which is DML (Data Manipulation Language). System core 231 can be employed for connecting of another interfaces, for example WEB 233 interface.

Yet another element of three-layer client-server type architecture 200 is intermediate layer 220 (Connector), for example MySQL Connector Net) between system core and database 210, which serves transferring of SQL queries do database and places results downloaded from the database in adequate structures, for example dataset, datatable, and similar. This is dedicated tool, handling connections to MySQL database for .Net Framework platform.

Database system, presented on Fig. 2 and 3, is based on relational model. Database engine employed enables using of transactions, which is described below, and transactional systems used prevent data integrity and coherence errors.

In one of solutions, database 300 presented on Fig. 3 consists of 29 tables connected to each other with adequate relations, for example one-to-one, one-to-many and many-to-many type. This relations result from logical linking of parameters originating from various tables, for example Simulation 320 constitutes subset of Project 310 table. In order to enter simulation related data, it is necessary to define project parameters prior to it, which can be divided on several logical parts, from which the most important ones are:
- project parameters, such as: project name, project number, starting data of the project, last modification date, project description, selected program used for carrying out of simulation calculations, metal type selected, forming method, cast type, pictures presenting the cast in four projections, the personnel responsible for the project, the customer for which specified project is being carried out, dimensions, possibly basic overall dimensions of the cast, weight and volume of the cast.
- simulation input parameters, including simulation type, for example including filling, solidification, filling and solidification, stresses, simulation type determined by production preparation stage, for example (simulation, simulation proven in a foundry, production, production optimization, defect), date of the simulation completion, the person completing the simulation, photos and CAD files of implemented technology including gating system, chills, risering, filter parameters, parameters of prepared spatial grid, descriptions to individual pictures;
- simulation output data, including simulation results presented first of all in form of photos, animations, charts, which can depend on simulation type selected, for example temperature field, liquid metal or material flow velocity field, filling time, percentage of liquid phase, thermal nodes, porosity, hardness, solidification time.

When defining a cast production design, which usually includes proposition of cast production technology that would lead to fabrication of cast meeting specified criteria, for example concerning the cast shape, strength of its parts, material and similar, specified by employer and optionally related to a foundry, it is necessary to specify parameters presented in Project table 310, for example project number, project name and similar data. Project table 310, shown on Fig. 3 is connected to Simulation, Picture, User, Cast, Mold, Program, Metal type and Metal tables. The relation with the Simulation table indicates, that simulations can be assigned to specified project. Link to the Photos table enables saving of four cast projections in form of photos in the Photos tables 332, 342. In one of solution three user types have been defined, namely Administrator, Operator and User. Administrator has the highest rights, therefore has access to the whole database system. Operator has access to own projects, and is entitled to modify them, as well as to remaining projects, that may only be viewed by him/her. Whereas User may only read or view the information, and has no rights to save data to database. Specific foundry may produce various casts, for example engine blocks, camshafts, blades for jet engines. Linking to the Cast table defines cast type that has been entered into database. The Mold table defines forming technology type, for example hot-box, cold-box, permanent mold, and similar. Linking to the Program table indicates simulation program that has been used for realisation of simulation computations. Depending on program selected, it is possible to select metal types, for example cast iron, cast steel, non-ferrous metals. After the metal type is selected, it is possible to select the proper metal that will be used in the project. The data originate from each simulation program internal database of materials.

In one of solutions, simulation results are presented in the form of photos. The photos are stored in database in various resolutions, two for example, namely the low one 150x150, and the high one 1024x768. This results from data transfer speed optimization between server and client. Low-resolution thumbnails of the photos are present in various places of graphical user interface, and clicking such thumbnail causes opening of special viewer with full resolution photo loaded in it.

Taking into consideration that database system is transactional system, in course of project saving in database, all another project related information are stored in database, or nothing is stored in the database, according to the "all or nothing" rule. Such method of saving resolves lack of data integrity problem.

Large number of parameters gives the user access to very broad searching criteria range. The system is based on relational model, which enables, among others, scalability, that is system adaptation capability to increasing amount of processed data. The advantage of database system is its capability of expanding it with new functionality. Taking into consideration that user interface has modular structure, possibility of further system expanding and adding new panels, windows and modules exists.

The database can store various types of information, for example pictures, animations, numerical parameters, textual data, charts, diagrams, reports, statistical studies, etc. Each table in database design has adequate columns defined. Adequate data type is assigned to each column, for example as Integer numbers, text string of determined length (Varchar), binary files (Binary Large Object, abbreviated as BLOB).

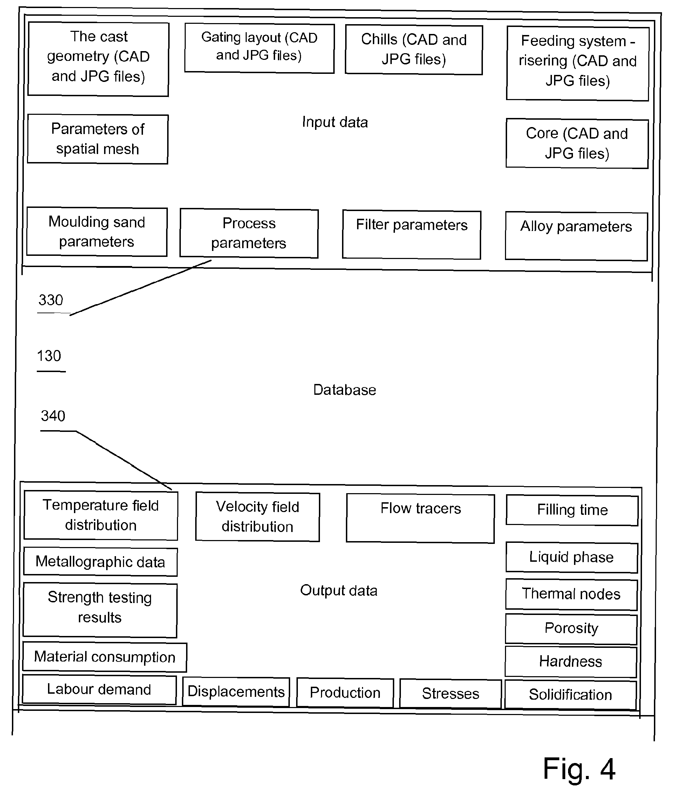

Several tables are linked to the Simulations tables 320, for example Technology table 331, containing input parameters defined by user, who may be a process engineer in a foundry, Results table 342 containing output data constituting results of simulation program, Simulation Parameters table, and some other tables, database 130, which part was shown in detail on Fig. 4, was logically divided into two parts. The first part are input data 330, represented by cast geometry, gating system, chills, cast feeding system - risers, spatial grid parameters, molding sand parameters, technological parameters, filter, alloy and alloy core parameters, and similar. The user can influence these parameters and can obtain intended results by their adequate modification. The second part is Output Data 340, to which Results table 342 is assigned, to which Photos table is linked in turn, because simulation results are mainly presented in form of photos, possibly with additional data. The results are represented by temperature field distribution, liquid metal velocities field distribution, flow tracers, filling time, liquid phase percentage in relation to solidified metal, thermal nodes, porosity, hardness, solidification time, stresses, production parameters, labour demand, displacements, material consumptions, results of strength testing, metallographic data, and similar.

So input data, stored in database, are made up from developed technology, or real technology or also technology resulting from simulation, including working out of gating system geometry, selection of adequate chills, optimal arrangement as well as adequate number and size of risers, application of adequate filter, selection of filling temperature as well as time of filling, and similar. Besides, in database is entered information regarding cast alloy, parameters of this alloy such as density, for example to calculate cast mass at 20°C temperature. Additionally information concerning molding sand, for example the molding sand composition and its basic parameters, as well as forming technology, for example coldbox, hotbox, and similar mentioned earlier, is stored in the database. Furthermore detailed information regarding created spatial grid serving calculations is located in the database. The data designated as CAD and JPG is stored in form of CAD and JPG type files. CAD files are stored in order to make possible downloading them from the database and opening automatically in CAD program defined by administrator, while JPG files are used for visualisation purposes.

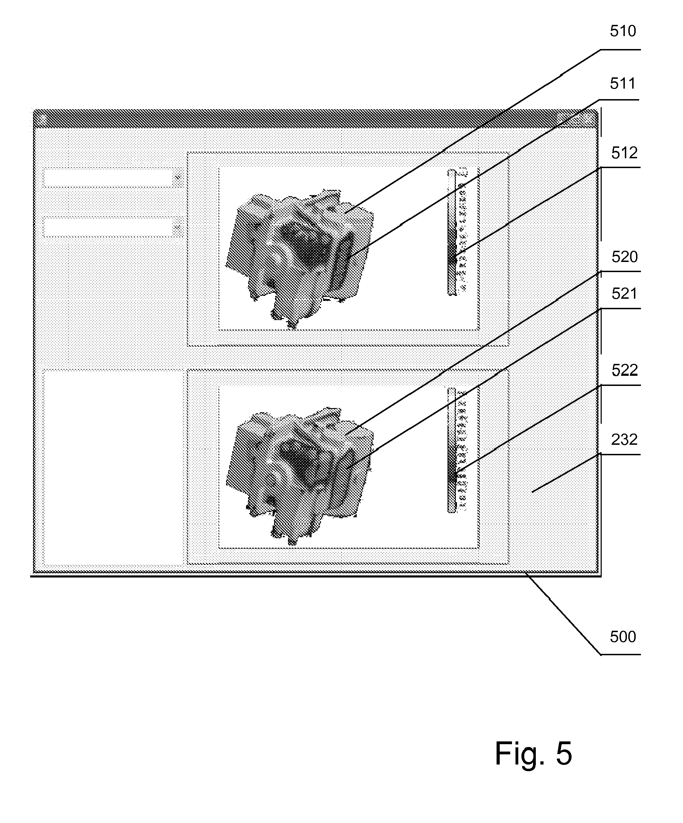

Fig. 5 presents a model view of graphical user interface 232 with panel 500, serving for comparing photos of real cast or cast photos 510, 520 generated during cast production process simulation. The panel serves also for comparing films or animations concerning selected simulation results. In this manner user can determine, whether improvement or deterioration of some simulation results occurred following change of input parameters, assigned to new technology version. By means of colours 511, 521, assigned to scales 512, 522 that are mapped on photos 510, 520, user is able to determine whether the new technology influenced, for example, distribution of stresses created in the cast after completion of molding process, designating, for example, improvement with green colour, lack of changes with light blue colour, while state of stresses deterioration with red colour, as compared to the first or original cast version.

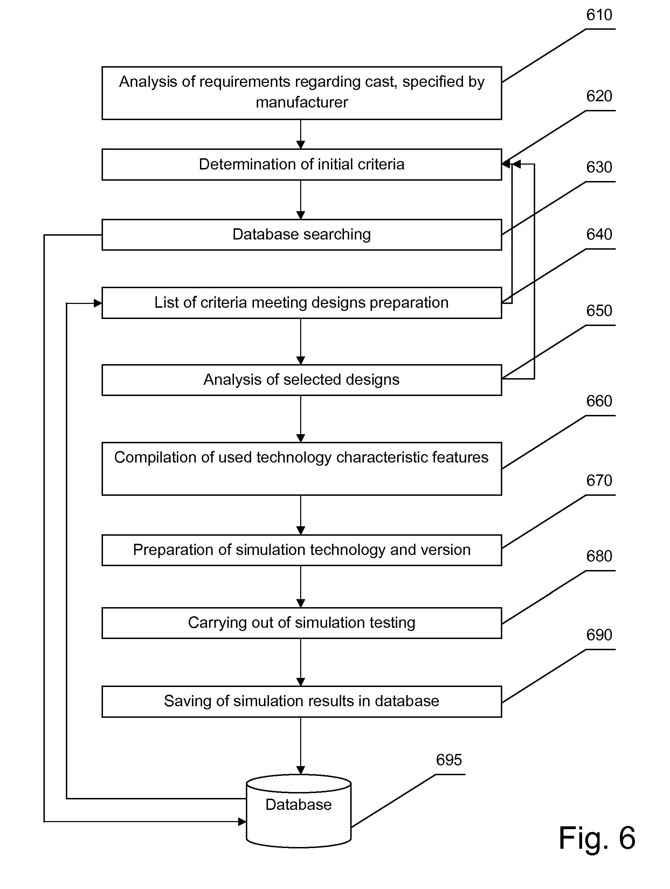

Fig. 6 presents block diagram of one from several possible procedures of molding process preparation, which in case of database lack in foundry or lack of access to the database, should be supplemented by creation of database that can be created from data collected in the foundry. Such database can be created in the moment of database system installation on one of the computers performing as server and included in the computer system of the foundry. After database system installation is completed, its configuration, adaptation to specific foundry conditions and checking its operation follows, and then user accounts with various rights are created and necessary information entered into system. When working out, according to the method conforming to new invention, a new design which constitutes set of information defining cast production technology by means of various thermo-kinetic and technological parameters of cast production technology, requirements or criteria are taken into consideration concerning the cast and specified by employer, which are subjected to analysis in step 610. In the subsequent step 620 individual cast features, such as overall dimensions, alloy type, molding sand, thickness of cast walls, and similar are defined, specified as search criteria. Based on selected features that constitute search criteria, database is searched in step 630. As the search result a list of designs fulfilling preset search criteria, called also distinctive features of the design, is obtained. In the subsequent step 650 analysis of selected designs is carried out for using them in the new technology. In the following step 660 a compilation of selected technology characteristic features can be prepared. Next, basing on selected technology features and following possible correction adjusting selected technology to the foundry conditions, first version of simulation is worked out in step 670 and simulation testing carried out in step 680. In the next step 690, saving of simulation results in database 695 proceeds, which can include data or information regarding temperature field distribution in time, velocities field distribution in time, flow tracers in time, filling time, liquid phase percentage, thermal nodes, porosity, hardness, cast solidification time, data concerning stresses, displacements, metallographic testing results, strength testing results, data regarding material consumption, as well as data on production, labour demand, and similar. It may turn out after first simulation, that technology selected from the list of designs meets search criteria, then next stage of production preparation is started, for example cast prototypes are carried out.

Subsequent simulations are carried out if necessary following first simulation results analysis, in order to improve, for example, strength parameters and minimise casting defects present.

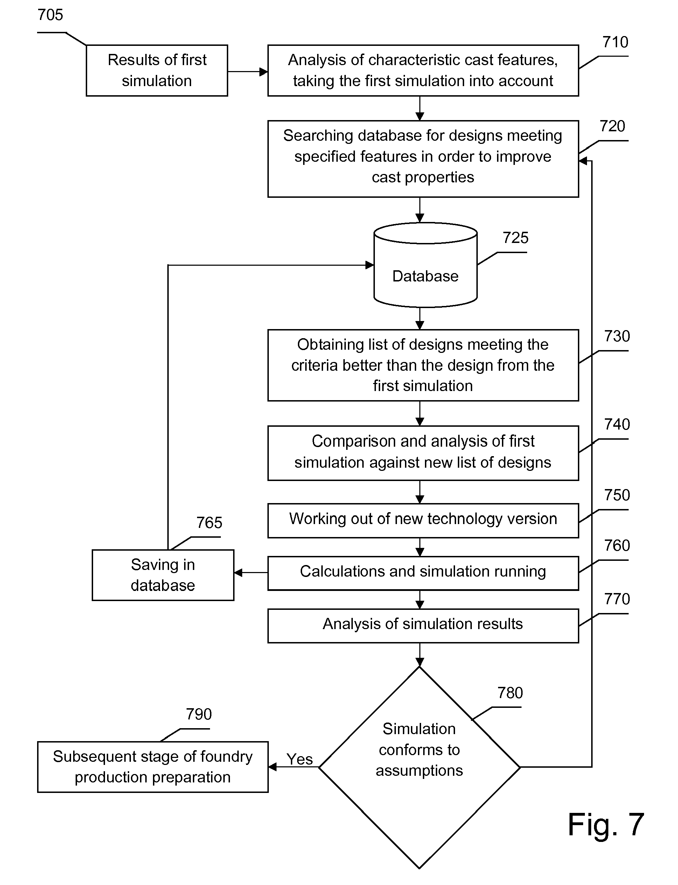

Fig. 7 presents block diagram of one possible procedure of casting process preparation and realisation according to the method conforming to the invention, following obtaining of first simulation results 705, which is started with step 710, in which characteristic cast features are subjected to analysis with consideration given to the first simulation. In the subsequent step 720, designs that meet specified features or criteria for the cast properties improvement are searched again in database 725. After obtaining in step 730 list of designs better meeting search criteria than the technology design from the first simulation, results of the first simulation are analysed and compared against new list of technology designs in step 740, while in step 750 working out of new technology version is carried out. The designs downloaded from database may differ significantly from the current design, but selecting higher number of characteristic features enables narrowing of searching range. When analysis of designs selected from database is completed, adaptation of selected solutions will follow, for example by means of changing parameters, geometry, application of non-standard procedures. Next in 760 step, computations necessary for running of simulation, which results are saved in database in step 765 and analysed in step 770, are carried out. After checking of simulation results against assumptions in step 780, either transition to step 790 of subsequent cast production preparation stage proceeds, or return to step 720 takes place in case when simulation results do not meet assumptions.

In the most generally expressed casting method conforming to the invention, part of cast features that are specified by employer or future user of the product, or even all the features, become the initial criteria or search criteria, on the grounds of which list of designs is prepared as the result of searching. At least one cast production technology design is selected from these designs, which is analysed while checking whether application of technology from this selected design will result in obtaining of the cast that may possess such features, or properties, which have been specified by the employer or future user of the product. By entering input parameters into simulation, which can be the same as in design selected, or changing them intuitively depending on experience, while simultaneously entering the cast dimensions, simulation is carried out and output data checked for their correspondence to features specified by employer or future user of the product. In case when simulation output data correspond to features specified by employer, one proceeds to further cast production stages, for example for carrying out of prototype.

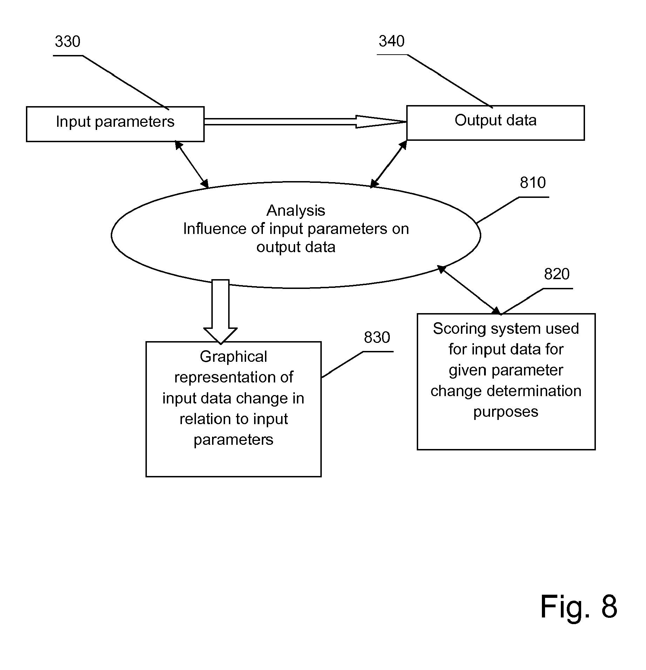

Fig. 8 presents block diagram of input parameters 330 influence on output data 340 analysis interconnections, as well as graphical representation of parameters change and scoring system. Such additional analysis is carried out within the same design frameworks. Examination covers influence of input data, that is parameters characterising specific technology, such as filling temperature, filling time, risering mass to cast mass ratio and similar, on output data which are results of simulation and most frequently are presented in graphical form 830, for example as photos, animations and films. In order to compare simulation results, simple scoring system 820 has been used. In special window for comparing of simulation results, for example in form of photos, pictures or animations, user analyses two adjacent simulation versions for the same parameter, porosity for example. The user assesses whether an improvement of checked parameter, porosity for example, has taken place in result of applying technology changes for the new version. Then one common chart is built for input data and output data. Individual parameters are distinguished with colours, which is presented on the chart key. On the grounds of the table or the chart one can determine how the change of selected parameters influences computations results.

Below follows description of selected project stages or steps, among which:
- Simulation stage or step determines simulation testing phase, that can result in obtaining of cast conforming to customer requirements and free from casting defects;
- Checking stage or step is the next phase in casting production preparation process. On the grounds of the recent simulation results, an experimental - so called test heat is prepared, according to user assumptions. Next, the critical places are tested, in which one should expect defects, based on data originating from the simulation program. If quality of the product is not satisfactory, the design returns to simulation stage. If the cast is accepted, then series production of cast can be started, while the design changes its status on production stage (Production). If the design passes to checking stage, the data is stored in a panel especially prepared for this preparatory stage. Then by means of panel used for simulation versions comparing purposes, virtual simulation can be compared to real process carried out in the foundry during checking stage;

- Production stage or step is equivalent to starting serial production of the cast;
- Optimization stage or step is the subsequent phase, during which the cast is manufactured in series production, but research works serving optimization of the process, material consumption, wall thickness decreasing without compromising strength properties, are carried out. After completion of optimization stage, checking stage should be passed once again;
- Defects occurrence stage or step is a stage of casting production preparation process and occurs when in result of unexplained circumstances, for example a seasonal influences on number of rejects, air humidity changes, the cast has much more defects than it would resulted from the production history.

Interactive database system, conforming to the invention, may serve designs archiving, easy searching of specific designs with use of various search criteria, analysis of simulation results generated by arbitrary programs for casting processes simulation. The system may also serve effective management of many projects and enable viewing of various statistics, generating of reports, charts of relations between input and output data, as well as to compare simulation versions for the same type of operations, for example filling, solidification, stresses.

Thanks to the method conforming to the invention, developing of new technology is not started from carrying out of simulation based on the cast data which is to be produced, but on the grounds of this data particular features of the cast are determined, which constitute search criteria in simulation results and data concerning real casting technologies database. A list of technologies, meeting preset search criteria is obtained as the result. After short analysis of selected technologies having similar nature, it is possible to considerably decrease number of simulations enabling development of new casting technology for specified item.

## Claims

1. Method for casting using simulation of casting process comprising steps of defining of cast features based on cast related information received, working out of casting process simulation, running the casting process simulation and executing the casting process after successful completion of test of casting process simulation, **characterised in that** initial searching criteria based on the cast features defined on the grounds of received information (610) are determined (620) and used in database (695) searching (630) in order to get a list of designs (640), from which every one constitutes information set defining cast production technology by means of thermo-kinetic and process engineering parameters, and best meeting the searching criteria, while the database (695) is created from data related to carried out simulations of casting process and real casting processes, and contains data regarding the foundry, structural and material data of casts, casts execution technology descriptions, results of worked out casting processes simulations, descriptions of produced casts, and relations between foundries related data, casts structural data, descriptions of casts production technological procedures and results of worked out simulations as well as descriptions of produced casts, while at least one design from casts design list, best meeting the searching criteria and constituting an information set defining cast production technology with thermo-kinetic and technological parameters, after being found in the database, constitutes input data for molding process simulation development of the cast which is to be produced.

2. The method for casting according to claim 1 **characterised in that** after the list of designs best meeting the search criteria is obtained, an analysis (650) of selected design or selected designs is executed for using them in casting process, simulation of casting process is worked out (670), with optional change of simulation input parameters, the casting process simulation is run (680), and its results saved in the database (695).

3. The method for casting according to claim 2 **characterised in that** after completion of the simulation its results are analysed and checked for conformity with the cast features, defined on the grounds of received information, and in case the simulation results do not meet the initial assumptions regarding the cast features, specific features characterising the design are selected and subsequent search criteria determined, and the database searched again in order to obtain subsequent design meeting search criteria, repeating the database searching and/or simulation until the design is found which, after performing of simulation for the subsequent design, will meet initial assumptions regarding the cast features.

4. The method for casting according to claim 2 or 3, **characterised in that** additional design analysis is carried out, examining selected input data influence on output data resulting from introduced cast production technology changes for new version of the design, in order to determine how the change of selected parameters influences simulation results, by comparing results of two simulations with use of simple scoring system.

5. The method for casting according to claim 4, **characterised in that** input data are part of database, can be supplemented, are modifiable and are input parameters characterising the specified casting technology, selected from a data group relating cast geometry, filling system geometry, chills, feeding system as well as arrangement and adequate number and size of risers, core, molding sand parameters, technological parameters, spatial grid parameters, filter parameters, alloy parameters, filling temperature, filling time, mass of risers to mass of cast ratio.

6. The method for casting according to claim 4 or 5, **characterised in that** output data are part of database, can be supplemented, are modifiable and are results of simulations regarding data selected from the group consisting of information related to cast temperature field distribution in time, velocity field distribution in time, flow tracers, metallographic data, results of strength tests, material consumption, labour demand, displacements, production, stresses, filling time, liquid phase percentage, thermal nodes, porosity, hardness, solidification time.

7. The method for casting according to the claim 1, **characterised in that** the cast features are information selected from a group comprising data regarding cast overall dimensions, alloy type, molding sand, thickness of cast walls, forming technology, cast core used, casting technology.

8. The method for casting according to claim 1, **characterised in that** the design meeting the search criteria, or list of designs best meeting the cast related search criteria, obtained in result of simulation, contains information selected from a group comprising data concerning cast temperature field distribution in time, velocities field distribution in time, alloy flow tracers in time, filling time, liquid phase percentage, thermal nodes of cast, porosity of cast, hardness of cast, solidification time of cast, stresses, displacements, metallographic examination results, strength testing results, material consumption, production, labour demand.

9. The method for casting according to one of claims 1 to 8, **characterised in that** the database is part of database system, containing, apart from database itself, the user interface enabling viewing, downloading data contained in the database and making changes in it, while the database system has client-server type architecture, and the database is relational type and contains set of tables and relations linking them, while the tables contain at least information concerning numerical, textual and multimedia data.

10. System for casting using simulation of casting process and comprising receiving module of orders containing specified cast features, module of designs working out, module of simulations working out and running, prototyping facility and foundry, **characterised in that** the receiving module (110) of orders containing specified cast features is connected to cast designs searching module (120), each of them being information set defining cast production technology by means of thermo-kinetic and process engineering parameters, and meeting the cast features criteria, which has access to database (130) created on the grounds of carried out simulations of casting processes and real casting processes, and containing data regarding foundries and structural data of casts, casts execution technology procedures descriptions, results of worked out simulations, descriptions of produced casts, as well as relations between foundries related data, casts structural data, descriptions of casts production technological procedures and results of worked out simulations as well as descriptions of produced casts, while access to the database (130) is granted to analytic module (140) of cast designs best meeting search criteria related to cast features, while module of design analyses (140) is able to communicate with module of designs adaptation and development (150), which is connected to module (160) of simulations working out and running, which is connected to prototyping facility (170) and/or foundry (180), which are to produce the cast conforming to the order.

11. The system for casting according to claim 10, **characterised in that** input data constitute part of database, can be supplemented, modified and are input parameters characterising the specified casting technology, selected from a data group relating cast geometry, filling system geometry, chills, feeding system as well as arrangement and adequate number and size of risers, core, molding sand parameters, technological parameters, spatial grid parameters, filter parameters, alloy parameters, filling temperature, filling time, mass of risers to mass of cast ratio.

12. The system for casting according to the 10, **characterised in that** output data constitute part of database, can be supplemented, modified, and are results of simulations regarding data selected from the group comprising information related to cast temperature field distribution in time, velocity field distribution in time, flow tracers, metallographic data, results of strength tests, material consumption, labour intensity, displacements, production, stresses, filling time, liquid phase percentage, thermal nodes, porosity, hardness, solidification time.

13. Database used in casting process simulation, **characterised in that** it is relational type database comprising set of tables and relations between them, while the tables comprise information regarding numerical, textual and multimedia data, defining cast production technologies with thermo-kinetic and technological parameters.

14. Database according to claim 13, **characterised in that** it is created from data regarding completed casting process simulations and real casting processes, and comprisies foundries related data, as well as structural and material data of casts, descriptions of casts production technology, results of casting process simulations worked out, descriptions of produced casts and relations between foundry related data, casts structural data, descriptions of cast production technological procedures, as well as results of developed simulations and casts produced.

## Amended claims

### Amended claims in accordance with Rule 137(2) EPC.

**1.** Method for casting using simulation of casting process comprising steps of creating a database (695) with a user interface from data related to carried out simulations of casting process and real casting processes and containing data regarding the foundry, structural and material data of casts, casts execution technology descriptions, results of worked out casting processes simulations, descriptions of produced casts, and relations between foundries related data, casts structural data, descriptions of casts production technological procedures and results of worked out simulations as well as descriptions of produced casts, defining of cast features based on cast related information received, working out of casting process simulation, running the casting process simulation and executing the casting process after successful completion of test of casting process simulation, **characterised in that** initial searching criteria based on the cast features defined on the grounds of received information (610) are determined (620) and used in database (695) searching (630) in order to get a list of designs (640), from which every one constitutes information set defining cast production technology by means of thermo-kinetic and process engineering parameters, and best meeting the searching criteria, while the database (695) is relational type and contains set of tables and relations linking them and is part of database system having client-server type architecture, while at least one design from casts design list, best meeting the searching criteria and constituting an information set defining cast production technology with thermo-kinetic and technological parameters, after being found in the database, constitutes input data for molding process simulation development of the cast which is to be produced.

**2.** The method for casting according to claim 1 **characterised in that** after the list of designs best meeting the search criteria is obtained, an analysis (650) of selected design or selected designs is executed for using them in casting process, simulation of casting process is worked out (670), with optional change of simulation input parameters, the casting process simulation is run (680), and its results saved in the database (695).

**3.** The method for casting according to claim 2 **characterised in that** after completion of the simulation its results are analysed and checked for conformity with the cast features, defined on the grounds of received information, and in case the simulation results do not meet the initial assumptions regarding the cast features, specific features characterising the design are selected and subsequent search criteria determined, and the database searched again in order to obtain subsequent design meeting search criteria, repeating the database searching and/or simulation until the design is found which, after performing of simulation for the subsequent design, will meet initial assumptions regarding the cast features.

**4.** The method for casting according to claim 2 or 3, **characterised in that** additional design analysis is carried out, examining selected input data influence on output data resulting from introduced cast production technology changes for new version of the design, in order to determine how the change of selected parameters influences simulation results, by comparing results of two simulations with use of simple scoring system.

**5.** The method for casting according to claim 4, **characterised in that** input data are part of database, can be supplemented, are modifiable and are input parameters characterising the specified casting technology, selected from a data group relating cast geometry, filling system geometry, chills, feeding system as well as arrangement and adequate number and size of risers, core, molding sand parameters, technological parameters, spatial grid parameters, filter parameters, alloy parameters, filling temperature, filling time, mass of risers to mass of cast ratio.

**6.** The method for casting according to claim 4 or 5, **characterised in that** output data are part of database, can be supplemented, are modifiable and are results of simulations regarding data selected from the group consisting of information related to cast temperature field distribution in time, velocity field distribution in time, flow tracers, metallographic data, results of strength tests, material consumption, labour demand, displacements, production, stresses, filling time, liquid phase percentage, thermal nodes, porosity, hardness, solidification time.

**7.** The method for casting according to claim 1, **characterised in that** the cast features are information selected from a group comprising data regarding cast overall dimensions, alloy type, molding sand, thickness of cast walls, forming technology, cast core used, casting technology.

**8.** The method for casting according to claim 1, **characterised in that** the design meeting the search criteria, or list of designs best meeting the cast related search criteria, obtained in result of simulation, contains information selected from a group comprising data concerning cast temperature field distribution in time, velocities field distribution in time, alloy flow tracers in time, filling time, liquid phase percentage, thermal nodes of cast, porosity of cast, hardness of cast, solidification time of cast, stresses, displacements, metallographic examination results, strength testing results, material consumption, production, labour demand.

**9.** The method for casting according to one of claims 1 to 8, **characterised in that** the tables contain at least information concerning numerical, textual and multimedia data.

**10.** System for casting using simulation of casting process and comprising database created on the grounds of carried out simulations of casting processes and real casting processes, and containing data regarding foundries and structural data of casts, casts execution technology procedures descriptions, results of worked out simulations, descriptions of produced casts, as well as relations between foundries related data, casts structural data, descriptions of casts production technological procedures and results of worked out simulations as well as descriptions of produced casts, receiving module of orders containing specified cast features, module of designs working out, module of simulations working out and running, prototyping facility and foundry, **characterised in that** the receiving module (110) of orders containing specified cast features is connected to cast designs searching module (120), each of them being information set defining cast production technology by means of thermo-kinetic and process engineering parameters, and meeting the cast features criteria, which has access to database (130) being relational type and containing set of tables and relations linking them and being part of database system having client-server type architecture, while access to the database (130) is granted to analytic module (140) of cast designs best meeting search criteria related to cast features, while module of design analyses (140) is able to communicate with module of designs adaptation and development (150), which is connected to module (160) of simulations working out and running, which is connected to prototyping facility (170) and/or foundry (180), which are to produce the cast conforming to the order.

**11.** The system for casting according to claim 10, **characterised in that** input data constitute part of database, can be supplemented, modified and are input parameters characterising the specified casting technology, selected from a data group relating cast geometry, filling system geometry, chills, feeding system as well as arrangement and adequate number and size of risers, core, molding sand parameters, technological parameters, spatial grid parameters, filter parameters, alloy parameters, filling temperature, filling time, mass of risers to mass of cast ratio.

**12.** The system for casting according to claim 10, **characterised in that** output data constitute part of database, can be supplemented, modified, and are results of simulations regarding data selected from the group comprising information related to cast temperature field distribution in time, velocity field distribution in time, flow tracers, metallographic data, results of strength tests, material consumption, labour intensity, displacements, production, stresses, filling time, liquid phase percentage, thermal nodes, porosity, hardness, solidification time.

**13.** Database used in casting process simulation according to claim 1, **characterised in that** the tables comprise information regarding numerical, textual and multimedia data, defining cast production technologies with thermo-kinetic and technological parameters.

**14.** Database according to claim 13, **characterised in that** it is created from data regarding completed casting process simulations and real casting processes, and comprises foundries related data, as well as structural and material data of casts, descriptions of casts production technology, results of casting process simulations worked out, descriptions of produced casts and relations between foundry related data, casts structural data, descriptions of cast production technological procedures, as well as results of developed simulations and casts produced.
